# EUROPEAN PATENT SPECIFICATION

(11) **EP 2 981 725 B1**
(45) Date of publication and mention of the grant of the patent: **11.01.2017**
(21) Application number: 13715895.2
(22) Date of filing: 05.04.2013
(51) Int. Cl.: F16C 23/04, F16C 23/10, F16C 35/02

(54) **A SYSTEM AND METHOD OF INDEXING AND FIXING AN ECCENTRIC BEARING**
SYSTEM UND VERFAHREN ZUR INDEXIERUNG UND FIXIERUNG EINES EXZENTRISCHEN LAGERS
SYSTÈME ET PROCÉDÉ D'INDEXATION ET FIXATION D'UN PALIER EXCENTRIQUE

(43) Date of publication of application: 10.02.2016
(73) Proprietor: Schaublin SA, 2800 Delémont (CH)
(72) Inventor: MONNIN, Alain, CH-2822 Courroux (CH); CASSARD, David, F-25230 Seloncout (FR)
(74) Representative: Seemann & Partner Patentanwälte mbB
(86) International application number: PCT/EP2013/001010
(87) International publication number: WO 2014/161562

(56) References cited:
- DE-A1- 1 525 178
- US-A1- 2003 111 576

## Description

### Field of the Invention

The present invention relates to an eccentric bearing. More specifically, the present invention relates to a system and method for adjusting and fixing the position of a bore in the bearing relative to a housing in which the bearing is received and securing the position of the bore relative to the housing.

### Background of the Invention

An aircraft, for example a jetliner, may include a plurality of struts for transferring force within the aircraft and more specifically within its frame. A strut typically extends between a first end and a second end along a longitudinal axis. A least one end may be coupled to a spherical bearing to support the strut and transfer force to and therefrom. A disadvantage of known struts and bearings for receiving the struts is that specific dimensions of the components can vary as a result of acceptable manufacturing tolerances and/or as a result of environmental conditions such as temperature fluctuations and loading on the frame of the aircraft. As a result, it may be difficult to install and replace such struts, especially in the field.

US 2003/0111576 A discloses the features of the preamble of claim 1.

### Summary of the Invention

The present invention resides in a bearing according to claim 1 and a method of securing an eccentric bearing according to claim 12.

In some embodiments of the present invention the first spline comprises a male spline and the second spline comprises a female spline. In yet further embodiments of the present invention, the first spline comprises a plurality of involute teeth and the second spline comprises a plurality of involute teeth.

In some embodiments of the present invention the outer race member comprises a concave arcuate bearing surface and the inner race member comprises a convex arcuate bearing surface. In yet further embodiments of the present invention, the inner race member is angularly displaceable relative to the outer race member. In some embodiments of the present invention, the bearing is eccentric. In such embodiments, the first axis of rotation is laterally displaced from the second axis of rotation when the first axis of rotation is parallel to the second axis of rotation.

According to the present invention, the outer race member and the securing member are fixed about the first axis of rotation relative to a housing when the first spline is engaged with the second spline and the securing member is secured relative to the housing. In yet further embodiments of the present invention, the securing member comprises a first hole for receiving a first fastener. The first fastener is configured to pass through the first hole and be received in a second hole in the housing. In some embodiments, the first hole has a substantially greater cross sectional area as compared to a cross sectional area of the second hole so as the enable rotational positioning of the securing member while simultaneously providing access for the fastener to the second hole through the first hole.

In yet further embodiments of the present invention, the bearing includes a washer, block, plate or the like, for example, a cube having a hole extending therethrough. At least a portion of the first fastener is configured to pass through the cube hole and to pass through the first hole and to be received in the second hole in the housing, thereby securing the securing member and cube relative to the housing. In yet further embodiments of the present invention, a face of the securing member and a face of the cube comprise complementary relief patterns protruding therefrom to inhibit rotation of the securing member relative to the housing and the cube when the first fastener is received through the cube hole, through the first hole, and in the second hole. In yet further embodiments of the present invention, the complementary relief patters comprise a plurality of striations.

The present invention resides in another aspect in a method of securing an eccentric bearing. The method includes the step of providing a bearing. The bearing includes an outer race member having a first axis rotation and having a spline extending along a portion of the outer race member. The bearing further includes an inner race member having a second axis of rotation, the inner race member is disposed in the outer race member and the inner race member is rotatable relative to the outer race member about the second axis of rotation. The inner race member has a bore extending therethrough. The first axis of rotation is laterally displaced from the second axis of rotation when the first axis of rotation is parallel to the second axis of rotation. The method further includes the step of inserting the bearing in to a housing. The method further includes the step of rotating the outer race member relative to the housing to adjust the position of the bore relative to the housing. A shaft is received in the bore. The method further includes the step of providing a securing member having a second spline extending along a portion thereof. The first spline is engaged with the second spline. The method further includes the step of coupling the securing member to the housing so that the outer race member is fixed relative to the securing member about the first axis of rotation.

In some embodiments of the present invention, the method includes the steps of providing a fastener and providing a locking cube having a hole extending therethrough. A distal end of the fastener is inserted through the hole in the locking cube, then inserted through a hole in the securing member, then received in a hole in the housing adapted to receive the fastener.

In some embodiments of the present invention, the hole in the securing member has a substantially greater cross sectional area as compared to a cross sectional area of the fastener so as the enable rotational positioning of the securing member while simultaneously providing access for the fastener to the hole in the housing through the hole in the securing member.

In yet further embodiments of the present invention, a face of the securing member and a face of the cube comprise complementary relief patterns protruding therefrom to inhibit rotation of the securing member relative to the cube when the first fastener is received through the cube hole, through the first hole, and in the hole in the housing. In yet further embodiments of the present invention, the complementary relief patters comprise a plurality of striations.

### Brief Description of the Drawings

FIG. 1 is a perspective view of a bearing in accordance with one embodiment of the present invention.
FIG. 2 is a cross-sectional view of the bearing shown in FIG. 1.
FIG. 3A is a perspective exploded view of the bearing shown in FIG. 1.
FIG. 3B is a front view of a housing for receiving a bearing in accordance with one embodiment of the present invention.
FIG. 3C is a cross-sectional view of the bearing shown in FIG. 1.
FIG. 4A is an illustration of a front view of a bearing in accordance with one embodiment of the present invention.
FIG. 4B is an illustration of a front view of the bearing shown in FIG. 4A wherein the bearing has been rotated 30 degrees about the first axis of rotation.
FIG. 4C is an illustration of a front view of the bearing shown in FIG. 4A wherein the bearing has been rotated 180 degrees about the first axis of rotation.

### Detailed Description of the Invention

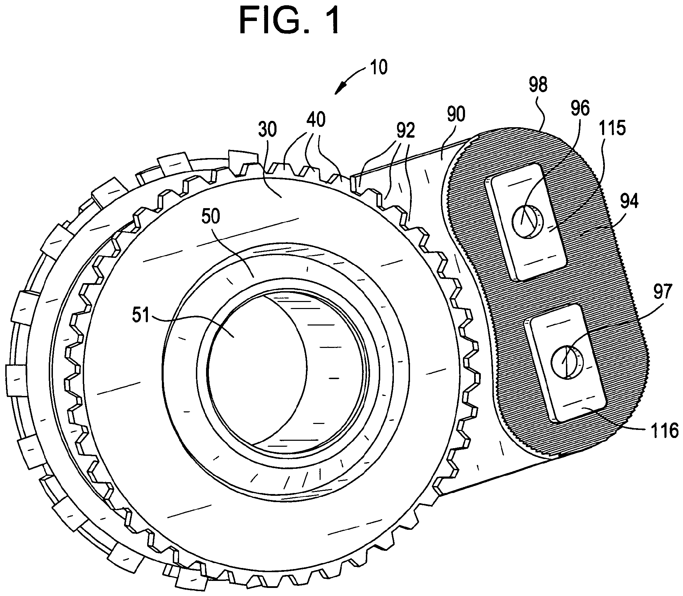

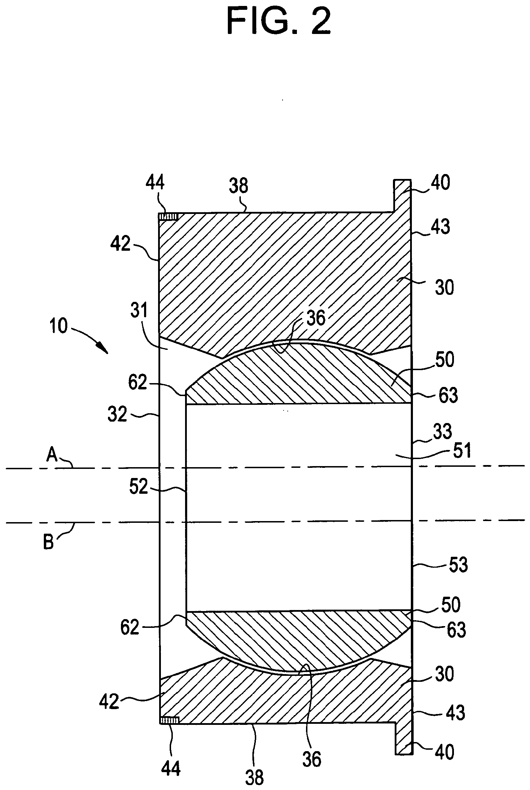

In reference to FIGS. 1-3 and with specific reference to FIG. 2, a bearing 10 in accordance with the present invention is shown. The bearing 10 includes an outer race member 30 having a first axis of rotation A. The outer race member 30 extends along a first axis of rotation A between a first edge 42 and a second edge 43.

An outer surface 38 of the outer race member 30 is cylindrical about the first axis of rotation A. A first spline 40 extends along at least a portion of the outer surface 38 of the outer race member 30. In the embodiment shown, the first spline 40 extends along the circumference of the outer race member 30 proximate to the second edge 43. The outer race member 30 includes a plurality of male threads 44 extending along a portion of the outer surface 38 of the outer race member 30. In the embodiment shown, the plurality of male threads 44 extend along the circumference of the outer race member 30 proximate to the first edge 42. The outer race member 30 defines a bore 31 that extends between a first opening 32 proximate to the first edge 42 and a second opening 33 proximate to the second edge 43. The outer race member 30 includes a concave arcuate bearing surface 36 that faces inwardly toward and is symmetric about a second axis of rotation B and which is eccentric relative to the outer surface 38, as described in detail below. The concave arcuate bearing surface 36 defines at least a portion of the bore 31.

The bearing 10 includes an inner race member 50. The inner race member 50 is coaxial with the second axis of rotation B. The inner race member 50 is disposed in the bore 31 of the outer race member 30. The inner race member 50 includes a convex arcuate bearing surface 56 that faces outwardly. The inner race member 50 extends along the second axis of rotation B between a first edge 62 and a second edge 63. The inner race 50 is rotatable relative to the outer race member 30 about the second axis of rotation B. The inner race member 50 is angularly displaceable relative to the outer race member 30. The inner race member 50 defines a bore 51 that extends between a first opening 52 proximate to the first edge 62 and a second opening 53 proximate to the second edge 63.

In the embodiment shown, the bearing 10 is an eccentric bearing because the concave arcuate bearing surface 36 and the convex arcuate bearing surface 56 are positioned eccentrically relative to the outer surface 38 with the first axis of rotation A is parallel to and laterally displaced from the second axis of rotation B. It should be understood that the bearing 10 in accordance with the present invention is not limited to an eccentric bearing and a person of ordinary skill in the art familiar with this disclosure would recognize that a bearing in which the first axis of rotation A is coaxial with the second axis of rotation B can used with the present invention.

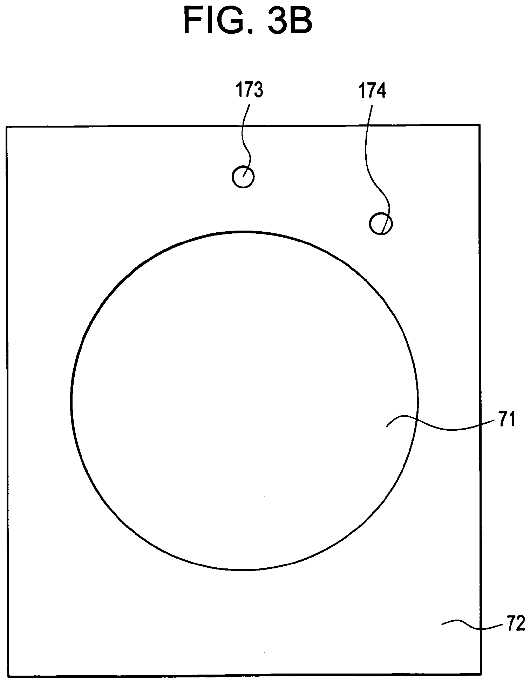

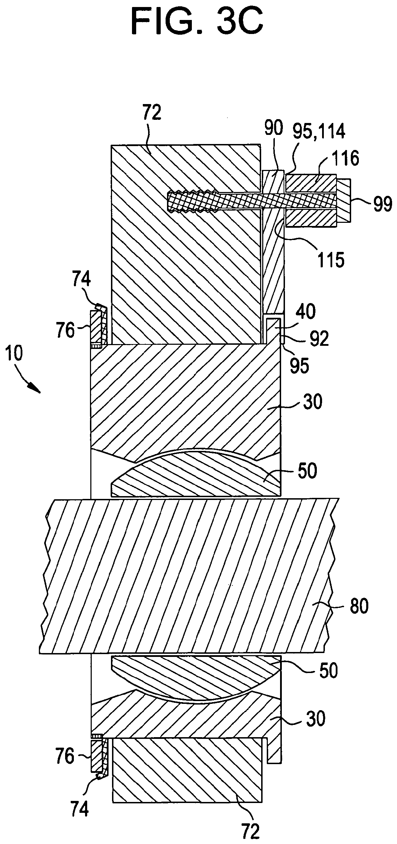

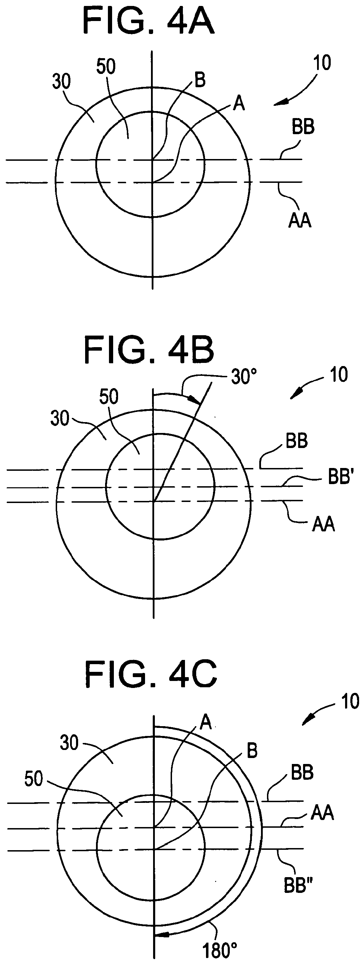

In reference to FIGS. 4A-4C, the eccentricity of the bearing 10 is shown. FIGS. 4A-4C show the effect of rotating the eccentric bearing 10 when it is disposed in a fixed housing, such as the housing 72 shown in FIG. 3B and 3C, but not shown in FIGS. 4A-4C. As a result of this purpose, certain features have been omitted from these illustrations such as, but not limited to, the first spline 40 and the securing member. The inner ring 50 is eccentrically disposed in the outer ring 30. The first axis of rotation A and the second axis of rotation B are shown as single points in FIGS. 4A-4C as the axes are perpendicular to the views shown in FIGS. 4A-4C. Line AA illustrates a first plane that is parallel to the first axis of rotation A and line BB illustrates a second plane that is parallel to the second axis of rotation B.

In reference to FIG. 4A, the first axis of rotation A is laterally displaced from the second axis of rotation B and the first plane AA is below the second plane BB. In FIG. 4B, the bearing 10 has been rotated 30 degrees about the first axis of rotation A relative to the original position of the bearing 10 in FIG. 4A. As is evident in FIGS. 4A and 4B., the 30 degree rotation of the bearing adjusts the position of the inner race member 50 relative to the first axis of rotation A. In particular, FIG. 4B shows the second axis of rotation B moved down from plane BB to plane BB' and to the right of axis of rotation A. If, for example, the inner ring 50 and the outer ring 30 were concentric relative to the outer surface 38, the 30 degree rotation of the bearing 10 would not adjust the position of the first axis of rotation A.

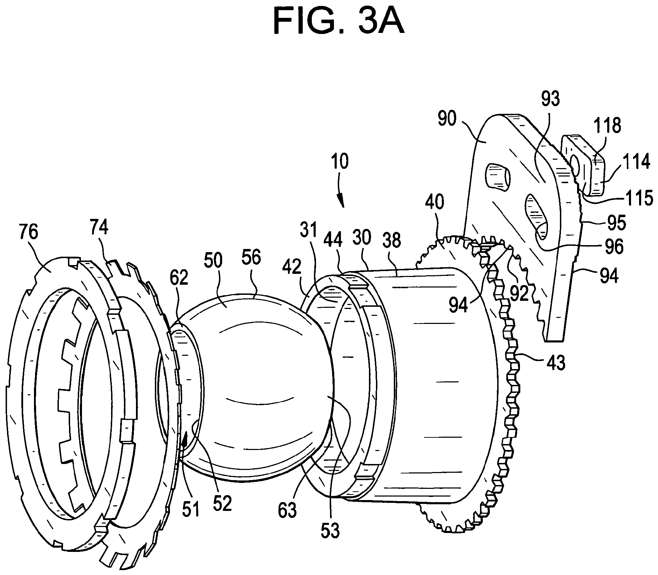

In reference to FIG. 4C, the bearing 10 has been rotated 180 degrees about the first axis of rotation A relative to the original position of the bearing 10 in FIG. 4A. As is evident from FIG. 4C, the 180 degree rotation of the bearing 10 adjusts the position of the inner race member 50 relative to the first axis of rotation A. In particular, FIG. 4C shows the second axis of rotation B moved down from plane BB to plane BB" and below plane AA. For example, the majority of the inner race member 50 is above the first plane AA in FIG. 4A, and the majority of the inner race member 50 is below the first plane AA in FIG. 4C after 180 degrees of rotation. In this manner (and as further explained below), the present invention allows for adjustment of the position of the bore 51 extending through the inner race member 50 relative to the housing 72 when the bearing 10 is received in the housing 72. The position of the inner race member 50 shown in FIG. 4C corresponds to the positions shown in FIGS. 2 and 3.

In reference to FIG. 3B, the bearing 10 is received in a housing 72. The housing includes a bore 71 for receiving the bearing 10. The cross section of the bore 71 is substantially similar to the cross section of the bearing 10. The housing 72 includes two holes 173, 174 each configured to receive a fastener. The utility of such holes is described in further detail below. The bearing 10 is inserted into the bore 71 of the housing 72. After the bearing 10 is inserted, the outer ring 30 can be rotated relative to the housing 72 about the first axis of rotation A, thereby adjusting the position of the bore 51 relative to the housing 72. After the bore 51 is properly adjusted, a shaft 80 (also referred to as a strut, or other name known in the art) is received through the bore 51. By enabling rotation of the outer ring 30 relative to the housing 72, the present invention enables the position of the bore 51 to be adjusted, thereby facilitating insertion of the shaft 80 through the bore 51, especially in the case where such an installation is performed in the field. After the outer ring 30 is adjusted to the preferred position, the outer ring 30 is locked in position relative to the housing 72 using a securing member 90. This locking step may occur before or after the shaft 80 is received in the bore 51 in the inner ring member 50.

In reference to FIG. 3C, a washer 74 is received around the outer surface 38 of the outer race member 30 proximate to the first edge 43 so that the washer 74 is adjacent to the housing 72. A retaining ring 76 having a plurality of female threads (not shown in the FIGS.) is received on the outside surface 38 of the outer race member 30 proximate to the first edge 43. The plurality of female threads engage the plurality of male threads 44 to fix the axial position of the retaining ring 76 and the outer race member 30 along the first axis of rotation A, relative to the housing 72. In some embodiments, the washer 74 includes a plurality of tabs that can be deflected against the retaining ring 76 to further secure the bearing 10 in the housing 72. It should be understood that the bearing 10 in accordance with the present invention is not limited to the housing arrangement disclosed in FIG. 3 and that a person of ordinary skill in the art familiar with this disclosure would recognize that many different housing arrangements and configurations may be used with the present invention.

In further reference to FIG. 3C, the shaft 80 is received in the bore 51 of the inner race member 50. An end of the shaft (not shown in the FIGS.) is coupled to object that is fixed relative to the bearing 10. In one example, the shaft is a strut. The proximal end of the strut is coupled to the bearing 10. For example, the bearing 10 is inserted into the housing 72 before the shaft 80 is received in the bore 51 of the inner race member 50. A problem may occur during insertion of the shaft 80 into the bore 51 due to relative variability in the dimensions of the requisite components. This problem is of particular concern when, in reference to the example above, a strut is replaced in the field.

As indicated above, the present invention overcomes the above described problem by providing an eccentric bearing 10 that can be rotated to adjust the position of the bore 51 in the inner race member 50, and then can be locked in place to inhibit further rotation. In reference to FIG. 1 and 3, a plate 90 (also referred to as a securing member) is provided to fix the position of the bore 51 relative to the first axis of rotation A. The plate 90 is generally planar and comprises a top surface 93 and a bottom surface 94 and at least one side surface 95 substantially perpendicular to the top surface 93 and the bottom surface 94. A second spline 92 extends along a portion of the side 95. The side 95 has a concave radius of curvature similar to an outer surface 38 of the outer race member 30 proximate to the first spline 40. The second spline 92 is engageable with the first spline 40. In the embodiment shown, the first spline 40 and the second spline 92 each comprise involute teeth. As can be appreciated by a person of ordinary skill in the art familiar with this disclosure, the present invention is not limited in this regard, and different types of teeth and/or gears may be used with the present invention. The plate 90 includes a first bore 96 extending between the top surface 93 and the bottom surface 94 and a second bore 97 extending between the top surface 93 and the bottom surface 94. In the embodiment shown, the cross section of the first bore 96 and the cross section of the second bore 97 are oblong. The bottom surface 94 of the plate 90 comprises a plurality of striations 98.

To lock the bearing 10 in position relative to the housing 72, the first spline 40 engages with the second spline 92 of the plate 90. The outer race member 30 is fixed relative to the plate 90 about the first axis of rotation A when the first spline 40 is engaged with the second spline 92. The plate 90 and the outer race member 30 are fixed about the first axis of rotation A by fixing the plate to the housing 72. A first fastener 99 and a second fastener (not shown in the FIGS) are inserted through the first bore 96 and the second bore 97, respectively, and are further secured in the housing, for example by complementary threads or the like, for example through holes and bolts. In the embodiment shown, the cross section of the fasteners 99 is substantially circular. A problem occurs when the second spline 92 of the securing member 90 is engaged with the first spline, in that the first and second bore holes 96, 97 do not align with the holes 173, 174 in the housing 72 for receiving the fasteners as a result of the specific position of the teeth in the spline during engagement. In this regard, the present invention overcomes this problem because the first and second bores 96, 97 are oblong, specifically, they define a concave opening that follows the art of holes 96, 97. In other words, the holes in the securing member have a substantially greater cross sectional area as compared to a cross sectional area of the fasteners so as the enable rotational positioning of the securing member while simultaneously providing access for the fastener to the hole in the housing through the hole in the securing member.

In further reference to FIGS. 3A and 3C, a washer, block, plate or the like, for example a locking cube 116, 117 is provided for each fastener hole. Each locking cube 116, 117 is generally rectangular and includes a hole 106, 107 extending therethrough. The first fastener 99 is inserted through the cube hole 106, through the first hole in the securing plate 96, and into the first receiving hole 173 in the housing 72. The second fastener, not shown in the FIGS., is similarly inserted through the second set of holes. While the locking cubes 116 and 117 are described as being generally rectangular, the locking cubes are not limited in this regard as other shapes and configurations may be employed including but not limited to plates having circular, triangular and hexagonal shapes.

A face of the securing member 94 and a face 115 of the cube comprise complementary relief patterns 95, 114, shown as striations, protruding therefrom. When the fastener 99 is secured, the complementary relief patterns 95, 114 engage with each other, thereby inhibiting rotation of the securing member 90 relative to the cube 116 when the first fastener 99 is received through the cube hole 106, through the first hole, and in the hole in the housing, thereby fixing the position of the outer race member 30 about the first axis A relative to first axis of rotation A. It should be understood that the bearing 10 and method in accordance with the present invention is not limited steps and configuration disclosed above and that a person of ordinary skill in the art familiar with this disclosure would recognize that many different arrangement and processes in accordance with the present invention may be employed. For example, the shaft 80 may be inserted into the bore 51 and then the position of the outer race member 30 relative to the bore 51 may be adjusted using the plate 90 prior to inserting the outer race member 30 in the housing 72.

Although the present invention has been disclosed and described with reference to certain embodiments thereof, it should be noted that other variations and modifications may be made. The invention is defined by appended claims only.

## Claims

1. A bearing (10), comprising:
an outer race member (30) having a first axis of rotation (A) ;
an inner race member (50) having a second axis of rotation (B), the inner race member (50) being disposed in the outer race member (30) and the inner race member (50) being rotatable relative to the outer race member (30) about the second axis of rotation (B);
and **characterized in** the outer race member (30) having a first spline (40) extending along a portion of the outer race member, the first spline (40) comprising a plurality of first teeth;
a securing member (90) having a second spline (92) extending along a portion thereof, the second spline (92) comprising a plurality of second teeth;
wherein the outer race member (30) is fixed relative to the securing member (90) about the first axis of rotation (A) when the plurality of first teeth first spline is engaged with the plurality of second teeth, to lock the bearing (10) in position relative to a housing (72).

2. The bearing (10) of claim 1, wherein the first axis of rotation (A) is laterally displaced from the second axis of rotation (B) when the first axis of rotation (A) is parallel to the second axis of rotation (B).

3. The bearing (10) of claim 1, wherein the outer race member (30) comprises a concave arcuate bearing surface (36) and the inner race member (50) comprises a convex arcuate bearing surface (56).

4. The bearing (10) of claim 3, wherein the inner race member (50) is angularly displaceable relative to the outer race member (30), wherein in particular the bearing (10) is eccentric.

5. The bearing (10) of claim 1, wherein the securing member (90) comprises a first hole (96) for receiving a first fastener (99).

6. The bearing (10) of claim 5, wherein the first fastener (99) is configured to pass through the first hole (96) and be received in a second hole (173) in the housing (72).

7. The bearing (10) of claim 6, wherein the first hole (96) has a substantially greater cross sectional area as compared to a cross sectional area of the second hole (173) so as to enable rotational positioning of the securing member (90) while simultaneously providing access for the fastener (94) to the second hole (173) through first hole (96).

8. The bearing (10) of claim 7, further comprising a washer (116) having a third hole (106) extending therethrough.

9. The bearing (10) of claim 8, wherein at least a portion of the first fastener (99) is configured to pass through the third hole (106) and to pass through the first hole (96) and to be received in the second hole (173) in the housing (72), thereby coupling the securing member (90) and the washer (116) relative to the housing (72).

10. The bearing (10) of claim 9, wherein a face (94) of the securing member (90) and a face (115) of the washer comprise complementary relief patterns (95, 114) protruding therefrom to inhibit rotation of the securing member (90) relative to the housing (72) and the washer (116) when the first fastener (99) is received through the third hole (106), through the first hole (96), and in the second hole (173).

11. The bearing (10) of claim 10, wherein the complementary relief patterns (95, 115) comprise a plurality of striations.

12. A method of securing an eccentric bearing (10), comprising the steps of:
providing a bearing (10) comprising:
an outer race member (30) having a first axis rotation (A) and having a first spline (40) extending along a portion of the outer race member (30), the first spline (40) comprising a plurality of first teeth;
an inner race member (50) having a second axis of rotation (B), the inner race member (50) being disposed in the outer race member (30) and the inner race member (50) being rotatable relative to the outer race member (30) about the second axis of rotation (B), the inner race member (50) having a bore (51) extending therethrough, the first axis of rotation (A) being laterally displaced from the second axis of rotation (B) when the first axis of rotation (A) is parallel to the second axis of rotation (B);
inserting the bearing (10) into a housing (72);
rotating the outer race member (30) relative to the housing (72) to adjust the position of the bore (51) relative to the housing (72);
receiving a shaft (80) in the bore (51);
providing a securing member (90) having a second spline (92) extending along a portion thereof, the second spline (92) comprising a plurality of second teeth;
after adjusting the position of the bore (51) relative to the housing (72), engaging the first spline plurality of first teeth with the plurality of second teeth second spline; and
coupling the securing member (90) to the housing (72) so that the outer race member (30) is fixed relative to the securing member (90) about the first axis of rotation (A) and locking the bearing (10) in position relative to the housing (72).

13. The method of claim 12, wherein in the step of coupling further comprises:
providing a fastener (99);
providing a washer (116), having a hole (106) extending therethrough;
inserting a distal end of the fastener (99) through the hole (106) in the washer (116);
inserting the distal end of the fastener (99) through a hole (96) in the secure member (90);
receiving the distal end of the fastener (99) in a hole (173) in the housing (72) adapted to receive the fastener (99).

14. The method of claim 13, wherein the hole (96) in the securing member has a substantially greater cross sectional area as compared to a cross sectional area of the fastener (99) so as the enable rotational positioning of the securing member (90) while simultaneously providing access for the fastener (99) to the hole (173) in the housing (72) through the hole (96) in the securing member (90).

15. The method of claim 14, wherein a face (94) of the securing member (90) and a face (115) of the washer (116) comprise complementary relief patterns (95, 115) protruding therefrom to inhibit rotation of the securing member (90) relative to the washer (116) when the first fastener (99) is received through the hole (106) in the washer (116), through the hole (96) in the securing member, and in the hole (173) in the housing (72), wherein in particular the complementary relief patterns comprise a plurality of striations.

## Patentansprüche

1. Lager (10), das Folgendes umfasst:
ein äußeres Laufringelement (30), das eine erste Drehachse (A) aufweist;
ein inneres Laufringelement (50), das eine zweite Drehachse (B) aufweist, wobei das innere Laufringelement (50) in dem äußeren Laufringelement (30) angeordnet ist und das innere Laufringelement (50) in Bezug auf das äußere Laufringelement (30) um die zweite Drehachse (B) drehbar ist;
und **dadurch gekennzeichnet, dass** das äußere Laufringelement (30) ein erstes Keilwellenprofil (40) aufweist, das sich entlang eines Abschnitts des äußeren Laufringelements erstreckt, wobei das erste Keilwellenprofil (40) eine Vielzahl erster Zähne umfasst;
ein Halteelement (90), das ein zweites Keilwellenprofil (92) aufweist, das sich entlang eines Abschnitts davon erstreckt, wobei das zweite Keilwellenprofil (92) eine Vielzahl zweiter Zähne umfasst;
wobei das äußere Laufringelement (30) in Bezug auf das Halteelement (90) um die erste Drehachse (A) fixiert ist, wenn die Vielzahl erster Zähne des ersten Keilwellenprofils in die Vielzahl zweiter Zähne eingreifen, um das Lager (10) in einer Position in Bezug auf ein Gehäuse (72) zu verriegeln.

2. Lager (10) nach Anspruch 1, wobei die erste Drehachse (A) seitlich von der zweiten Drehachse (B) versetzt wird, wenn die erste Drehachse (A) parallel zur zweiten Drehachse (B) ist.

3. Lager (10) nach Anspruch 1, wobei das äußere Laufringelement (30) eine konkave bogenförmige Lagerfläche (36) umfasst und das innere Laufringelement (50) eine konvexe bogenförmige Lagerfläche (56) umfasst.

4. Lager (10) nach Anspruch 3, wobei das innere Laufringelement (50) winklig in Bezug auf das äußere Laufringelement (30) versetzbar ist, wobei insbesondere das Lager (10) exzentrisch ist.

5. Lager (10) nach Anspruch 1, wobei das Halteelement (90) ein erstes Loch (96) zum Aufnehmen eines ersten Befestigungselements (99) umfasst.

6. Lager (10) nach Anspruch 5, wobei das erste Befestigungselement (99) ausgestaltet ist, um das erste Loch (96) zu durchqueren und in einem zweiten Loch (173) in dem Gehäuse (72) aufgenommen zu werden.

7. Lager (10) nach Anspruch 6, wobei das erste Loch (96) eine im Vergleich zu einer Querschnittsfläche des zweiten Lochs (173) im Wesentlichen größere Querschnittsfläche aufweist, derart, dass das drehbare Positionieren des Halteelements (90) ermöglicht wird, während gleichzeitig Zugang für das Befestigungselement (94) zu dem zweiten Loch (173) durch das erste Loch (96) bereitgestellt wird.

8. Lager (10) nach Anspruch 7, das ferner eine Unterlegscheibe (116) umfasst, die ein drittes Loch (106) aufweist, das sich dort hindurch erstreckt.

9. Lager (10) nach Anspruch 8, wobei mindestens ein Abschnitt des ersten Befestigungselements (99) ausgestaltet ist, um das dritte Loch (106) zu durchqueren und das erste Loch (96) zu durchqueren und in dem zweiten Loch (173) in dem Gehäuse (72) aufgenommen zu werden, wodurch das Halteelement (90) und die Unterlegscheibe (116) in Bezug auf das Gehäuse (72) gekoppelt werden.

10. Lager (10) nach Anspruch 9, wobei eine Seite (94) des Halteelements (90) und eine Seite (115) der Unterlegscheibe ergänzende Reliefmuster (95, 114) umfassen, die davon hervorstehen, um der Drehung des Halteelements (90) in Bezug auf das Gehäuse (72) und die Unterlegscheibe (116) entgegenzuwirken, wenn das erste Befestigungselement (99) durch das dritte Loch (106), durch das erste Loch (96) und in dem zweiten Loch (173) aufgenommen wird.

11. Lager (10) nach Anspruch 10, wobei die ergänzenden Reliefmuster (95, 115) eine Vielzahl Riefungen umfassen.

12. Verfahren zum Halten eines exzentrischen Lagers (10), das die folgenden Schritte umfasst:
Bereitstellen eines Lagers (10), das Folgendes umfasst:
ein äußeres Laufringelement (30), das eine erste Drehachse (A) aufweist und ein erstes Keilwellenprofil (40) aufweist, das sich entlang eines Abschnitts des äußeren Laufringelements (30) erstreckt, wobei das erste Keilwellenprofil (40) eine Vielzahl erster Zähne umfasst;
ein inneres Laufringelement (50), das eine zweite Drehachse (B) aufweist, wobei das innere Laufringelement (50) in dem äußeren Laufringelement (30) angeordnet ist und das innere Laufringelement (50) in Bezug auf das äußere Laufringelement (30) um die zweite Drehachse (B) drehbar ist, wobei das innere Laufringelement (50) eine Bohrung (51) aufweist, die sich dort hindurch erstreckt, wobei die erste Drehachse (A) seitlich von der zweiten Drehachse (B) versetzt ist, wenn die erste Drehachse (A) parallel zur zweiten Drehachse (B) ist;
Einsetzen des Lagers (10) in ein Gehäuse (72);
Drehen des äußeren Laufringelements (30) in Bezug auf das Gehäuse (72), um die Position der Bohrung (51) in Bezug auf das Gehäuse (72) anzupassen;
Aufnehmen einer Welle (80) in der Bohrung (51);
Bereitstellen eines Halteelements (90), das ein zweites Keilwellenprofil (92) aufweist, das sich entlang eines Abschnitts davon erstreckt, wobei das zweite Keilwellenprofil (92) einer Vielzahl zweiter Zähne umfasst;
nach dem Anpassen der Position der Bohrung (51) in Bezug auf das Gehäuse (72) Ineingriffbringen der Vielzahl erster Zähne des ersten Keilwellenprofils mit der Vielzahl zweiter Zähne des zweiten Keilwellenprofils; und
Koppeln des Halteelements (90) an das Gehäuse (72), derart, dass das äußere Laufringelement (30) in Bezug auf das Halteelement (90) um die erste Drehachse (A) fixiert wird und das Lager (10) in einer Position in Bezug auf das Gehäuse (72) verriegelt wird.

13. Verfahren nach Anspruch 12, wobei der Kopplungsschritt ferner Folgendes umfasst:
Bereitstellen eines Befestigungselements (99);
Bereitstellen einer Unterlegscheibe (116), die ein Loch (106) aufweist, das sich dort hindurch erstreckt;
Einführen eines distalen Endes des Befestigungselements (99) durch das Loch (106) in die Unterlegscheibe (116);
Einführen des distalen Endes des Befestigungselements (99) durch ein Loch (96) in dem Halteelement (90);
Aufnehmen des distalen Endes des Befestigungselements (99) in einem Loch (173) in dem Gehäuse (72), das angepasst ist, um das Befestigungselement (99) aufzunehmen.

14. Verfahren nach Anspruch 13, wobei das Loch (96) in dem Halteelement im Vergleich zu einer Querschnittsfläche des Befestigungselements (99) eine im Wesentlichen größere Querschnittsfläche aufweist, um die drehbare Positionierung des Befestigungselements (90) zu ermöglichen, während gleichzeitig der Zugang für das Befestigungselement (99) zu dem Loch (173) in dem Gehäuse (72) durch das Loch (96) in dem Halteelement (90) bereitgestellt wird.

15. Verfahren nach Anspruch 14, wobei eine Seite (94) des Halteelements (90) und eine Seite (115) der Unterlegscheibe (116) ergänzende Reliefmuster (95, 115) umfassen, die davon hervorstehen, um der Drehung des Halteelements (90) in Bezug auf die Unterlegscheibe (116) entgegenzuwirken, wenn das erste Befestigungselement (99) durch das Loch (106) in der Unterlegscheibe (116), durch das Loch (96) in dem Halteelement und in dem Loch (173) in dem Gehäuse (72) aufgenommen wird, wobei insbesondere die ergänzenden Reliefmuster eine Vielzahl Riefungen umfassen.

## Revendications

1. Un palier (10), comprenant :
un organe de roulement externe (30) ayant un premier axe de rotation (A) ;
un organe de roulement interne (50) ayant un deuxième axe de rotation (B), l'organe de roulement interne (50) étant disposé dans l'organe de roulement externe (30) et l'organe de roulement interne (50) étant apte à tourner par rapport à l'organe de roulement externe (30) autour du deuxième axe de rotation (B) ;
et dans lequel l'organe de roulement externe (30) présente une première cannelure (40) s'étendant le long d'une partie de l'organe de roulement externe, la première cannelure (40) comprenant une pluralité de premières dents ;
un élément de fixation (90) ayant une deuxième cannelure (92) s'étendant le long d'une partie de celui-ci, la deuxième cannelure (92) comprenant une pluralité de deuxièmes dents ;
l'organe de roulement externe (30) étant fixe par rapport à l'élément de fixation (90) autour du premier axe de rotation (A) lorsque la pluralité de premières dents est en prise avec la pluralité de deuxièmes dents, pour immobiliser le palier (10) en position par rapport à un boîtier (72).

2. Le palier (10) selon la revendication 1, dans lequel le premier axe de rotation (A) est déplacé latéralement par rapport au deuxième axe de rotation (B) lorsque le premier axe de rotation (A) est parallèle au deuxième axe de rotation (B).

3. Le palier (10) selon la revendication 1, dans lequel l'organe de roulement externe (30) comprend une surface d'appui arquée concave (36) et l'organe de roulement interne (50) comprend une surface d'appui arquée convexe (56).

4. Le palier (10) selon la revendication 3, dans lequel l'organe de roulement interne (50) est déplaçable angulairement par rapport à l'organe de roulement externe (30), le palier (10) étant en particulier excentrique.

5. Le palier (10) selon la revendication 1, dans lequel l'élément de fixation (90) comprend un premier trou (96) pour recevoir une première attache (99).

6. Le palier (10) selon la revendication 5, dans lequel la première attache (99) est configurée pour traverser le premier trou (96) et être reçue dans un deuxième trou (173) dans le boîtier (72).

7. Le palier (10) selon la revendication 6, dans lequel le premier trou (96) présente une aire de section transversale sensiblement plus grande par rapport à une section transversale du deuxième trou (173) de façon à permettre un positionnement en rotation de l'élément de fixation (90) tout en fournissant simultanément un accès pour l'élément de fixation (94) au deuxième trou (173) à travers le premier trou (96).

8. Le palier (10) selon la revendication 7, comprenant en outre une rondelle (116) présentant un troisième trou (106) s'étendant à travers elle.

9. Le palier (10) selon la revendication 8, dans lequel au moins une partie de la première attache (99) est configurée pour passer à travers le troisième trou (106) et passer à travers le premier trou (96) et être reçue dans le deuxième trou (173) dans le boîtier (72), couplant ainsi l'élément de fixation (90) et la rondelle (116) par rapport au boîtier (72).

10. Le palier (10) selon la revendication 9, dans lequel une face (94) de l'élément de fixation (90) et une face (115) de la rondelle comportent des motifs en relief complémentaires (95, 114) faisant saillie d'eux-mêmes pour empêcher la rotation de l'élément de fixation (90) par rapport au boîtier (72) et à la rondelle (116) lorsque la première attache (99) est reçue à travers le troisième trou (106), à travers le premier trou (96) et dans le deuxième trou (173).

11. Le palier (10) selon la revendication 10, dans lequel les motifs en relief complémentaires (95, 115) comprennent une pluralité de stries.

12. Un procédé de fixation d'un palier excentrique (10), comprenant les étapes consistant à :
utiliser un palier (10) comprenant :
un organe de roulement externe (30) ayant un premier axe de rotation (A) et ayant une première cannelure (40) s'étendant le long d'une partie de l'organe de roulement externe (30), la première cannelure (40) comprenant une pluralité de premières dents ;
un organe de roulement interne (50) ayant un deuxième axe de rotation (B), l'organe de roulement interne (50) étant disposé dans l'organe de roulement externe (30) et l'organe de roulement interne (50) étant apte à tourner par rapport à l'organe de roulement externe (30) autour du deuxième axe de rotation (B), l'organe de roulement interne (50) ayant un alésage (51) s'étendant à travers lui, le premier axe de rotation (A) étant décalé latéralement par rapport au deuxième axe de rotation lorsque le premier axe de rotation (A) est parallèle au deuxième axe de rotation (B) ;
insérer le palier (10) dans un boîtier (72) ;
faire tourner l'organe de roulement externe (30) par rapport au boîtier (72) pour ajuster la position de l'alésage (51) par rapport au boîtier (72) ;
recevoir un arbre (80) dans l'alésage (51) ;
prévoir un élément de fixation (90) ayant une deuxième cannelure (92) s'étendant le long d'une partie de celui-ci, la deuxième cannelure (92) comprenant une pluralité de deuxièmes dents ;
après avoir réglé la position de l'alésage (51) par rapport au boîtier (72), amener en prise la pluralité de premières dents de la première cannelure avec la pluralité de deuxièmes dents de la deuxième cannelure ; et
coupler l'élément de fixation (90) au boîtier (72) de sorte que l'organe de roulement externe (30) soit fixé par rapport à l'élément de fixation (90) selon le premier axe de rotation (A) et verrouiller le palier (10) en position par rapport au boîtier (72).

13. Le procédé selon la revendication 12, dans lequel l'étape de couplage comprend en outre :
le fait de prévoir une attache (99) ;
le fait de prévoir une rondelle (116), comportant un trou (106) s'étendant à travers celle-ci ;
le fait d'insérer une extrémité distale de l'attache (99) à travers le trou (106) dans la rondelle (116) ;
le fait d'insérer l'extrémité distale de l'attache (99) à travers un trou (96) dans l'élément de fixation (90) ;
le fait de recevoir l'extrémité distale de l'attache (99) dans un trou (173) dans le boîtier (72) adapté pour recevoir l'attache (99).

14. Le procédé selon la revendication 13, dans lequel le trou (96) dans l'élément de fixation présente une surface en coupe transversale sensiblement plus grande par rapport à une surface en coupe transversale de l'attache (99) de façon à autoriser le positionnement en rotation de l'élément de fixation (90) tout en assurant simultanément l'accès de l'attache (99) au trou (173) dans le boîtier (72) à travers le trou (96) dans l'élément de fixation (90).

15. Le procédé selon la revendication 14, dans lequel une face (94) de l'élément de fixation (90) et une face (115) de la rondelle (116) comprennent des motifs en relief complémentaires (95, 115) faisant saillie d'eux-mêmes pour empêcher la rotation de l'élément de fixation (90) par rapport à la rondelle (116), lorsque la première attache (99) est fixée à travers le trou (106) dans la rondelle (116), à travers le trou (96) dans l'élément de fixation, et dans le trou (173) dans le boîtier (72), dans lequel en particulier les motifs en relief complémentaires comprennent une pluralité de stries.
